# EUROPEAN PATENT APPLICATION

(11) **EP 0 894 602 A1**
(43) Date of publication of application: **03.02.1999**
(21) Application number: 98305782.9
(22) Date of filing: 16.07.1998
(51) Int. Cl.: B29C 45/14

(54) **Method and apparatus for manufacturing an acute angie film-covered flange**

(30) Priority: 30.07.1997 US 903113
(71) Applicant: Ford Motor Company, Dearborn, MI 48126 (US)
(72) Inventor: Moore, Dale, Plymouth, Michigan 48170 (US); Chernyak, Zinoviy, Farmington Hills, Michigan 48331 (US)
(74) Representative: Messulam, Alec Moses

(57) **Abstract**

A method and apparatus for manufacturing an acute angle film-covered flange comprising the following steps. An injection molding press (10) having a cavity (12), a core (14), a slide (30) movable between retracted and extended positions between said core (14) and cavity (12), and a recessed portion (38). The film (18) is formed to have an in-turned flange portion (24) that will form the covering for the final article. The film is placed within the mold. The slide (30) is retracted and the core (14) is moved within the mold. After the press (10) is closed the slide (30) is moved from the retracted position to the extended position. The slide (30) contacts the flange portion (24) and folds the flange portion into an acute angle. The recessed portion (38) is positioned opposite the flange portion (24) to create a space (40) there between. A molten plastic material is injected into the space (40). The plastic material adheres to the flange portion (24) of the pre-moulded thermoformed film (18) and forms an article having an acute covered flange.

## Description

The present invention is directed to a method and apparatus for forming an acute film-covered flange. More specifically, the present invention is directed to providing a press with a moveable slide between a cavity and core that contact a flange portion of the film to fold it to form the film-covered flange.

This application is related to commonly assigned US patent application, No. 08/903078.

It is also known to manufacture molded articles using flexible films wherein the film is placed within a mold and a polymer is injected behind the film to heat and soften the film backing. The film backing fuses to the polymer to form a molded article. An example of this type of method is taught in US patent No. 3,668,034. One difficulty in manufacturing molded articles using pre-molded flexible films, is properly positioning the flexible film within the mold so that it is free of wrinkles or creases and is precisely positioned in the cavity to register with the contours to form the desired article. Heretofore, proper placement of the pre-molded film within the cavity has been a major stumbling block to widespread application of pre-molded films. The problem is especially acute when handling pre-molded thin films for large automotive applications such as bumper facias. The entire surface area of the film must be properly positioned within the cavity to produce a defect-free article. Slight misalignments will cause wrinkles or defects and make the article unusable.

It is necessary to precisely place the film between the operable core and cavity pieces of a molding press. Because these operable pieces open and close, it is advantageous to provide a mechanism which allows the pre-molded film to be robotically placed within the mold cavity rather than manual placement by an operator. It is also desired that the method and apparatus utilize existing molding equipment to the maximum extent possible.

It is desirable to form articles with flange portions. The flange acts as a mechanism to attach the article and to provide the article with additional strength or rigidity. When used in exterior automotive applications such as bumper facias, the flange is abutted adjacent to another component. A portion of the flange remains visible. The appearance of the flange should match that of the adjacent components. In most cases, these flange portions are painted to match the rest of the facia. A difficulty arises when manufacturing these components using a pre-painted film. The film must wrap around the flange. It is desirable that the film wrap around the flange even when the flange is formed into an acute angle.

It is known to form a covered edge using in-mold films. An example of this construction is illustrated in US patent No. 5,599,608. A film having a re-entrant edge portion is placed within a mold. A mold is moved to contact the core. The core engages the re-entrant portions and folds them within the mold cavity. Molten plastic is injected into the mold cavity and the combination of closing the mold combined with the pressure of the molten plastic material forces the re-entrant edge portions against the mold wall to form the covered edge of the molded article.

The method described in US patent No. 5,599,608 is limited to forming an edge portion having a width equal to the thickness of the substrate. This is useful when forming a part having a covered edge, but not useful when forming a part having a covered flange. A flange requires a space behind it. This space is known as an undercut. The 5,599,609 patent does not teach forming parts having an undercut.

It is also known to include pins or slides in the core to assist in removing the article from the mold. The plastic forms around the pin or slide and the article remains within the core when the press is opened. What has not been shown, is the use of a slide to fold the film into an acute angel to form an acute flange portion. If the film is pre-formed to have an acute angle flange portion before it is placed in the tool, then the flange portion must be spread to close the mold or the core and the cavity will crush the flange portion. This spreading would likely require time consuming hand placement of the film over the core. It is desirable to place the film within the press without spreading the flange portions and forming the acute flange portion by closing the press.

It is known to manufacture articles in a mold that is subject to "die-lock". Die-lock is a condition that either prevents the mold from opening or from removing the article from the mold. When manufacturing flanges having an acute angle, a portion of the flange must wrap around the core and form an undercut. Either the core must be collapsed or the flange must be spread to remove the article.

The present invention is directed to a method of manufacturing an acute angle film-covered flange comprising the following steps. An injection molding press having a cavity, a core, a slide movable between retracted and extended positions between said core and cavity, and a recessed portion. The film is formed to have an in-turned flange portion that will form the covering for the final article. The film is placed within the mold. The slide is retracted and the core is moved within the mold. After the press is closed the slide is moved from the retracted position to the extended position. The slide contacts the flange portion and folds the flange portion into an acute angle. The recessed portion is positioned opposite the flange portion to create a space there between. A molten plastic material is injected into the space. The plastic material adheres to the flange portion of the pre-molded thermoformed film and forms an article having an acute covered flange.

The invention also includes an apparatus for forming an article having a film-covered flange. The apparatus includes a moveable press having a cavity, a core, and a slide. The slide is positioned between the core and press and is movable between the retracted and extended positions. The cavity receives a thermoformed film having a flange portion. The press includes a recessed portion that is opposite the flange portion when the press is closed and when the slide is moved to the extended position. The recessed portion and flange portion define a space forming an acute angle adjacent to the flange portion. The slide has a tip that contacts the flange portion to fold it into an acute angle and to seal the space. A resin inlet injects a molten plastic material into the space. The molten plastic material adheres to the flange portion to form an article having an acute film-covered flange.

The invention enables the manufacture of film-covered articles having a covered flange portion. It is another advantage of the present invention to provide a core with moveable slides that forms the flange and retains the article on the core. It is yet another advantage of the present invention that the slide optionally assist in removing the article from the mold.

The invention will now be described, by way of example, with reference to the accompanying drawings, in which:
Figure 1 is a cross-sectional view of an open mould;
Figure 2 is a cross-sectional view of the mold illustrated in Figure 1 in the closed position with the slide in the retracted position;
Figure 3 is a cross-sectional view of the mold illustrated in Figure 1 in the closed position with the slide in the extended position;
Figure 4 is a cross-secticnal view of the mold illustrated in Figure 1 removing the article from the cavity;
Figure 5 is a cross-sectional view of the mold illustrated in Figure 1, with the slide in the retracted position and removing the article from the core; and
Figure 6 is a cross-sectional view of the mold illustrated in Figure 1, with the article removed from the mold.

The present invention will be described through a series of drawings, which illustrate a molding of a flexible film having an in-turned flange portion using a core having one or more moveable slides. The invention will be illustrated as molding an automotive bumper facia. Other components such as instrument and door panels may be manufactured using the same or similar technique and equipment and are included within the invention described herein. The following items are a word list of the items described in the drawings and are reproduced to aid in understanding the invention:
- 10: press
- 12: cavity
- 14: core
- 16: cavity surface
- 18: film
- 20: painted surface
- 22: backing sheet
- 24: film flange portion
- 26: corner
- 28: molding surface
- 30: slide
- 32: end
- 34: angled surface
- 36: shut-off surface
- 38: recessed portion
- 40: space
- 42: resin inlet
- 44: article
- 46: covered flange

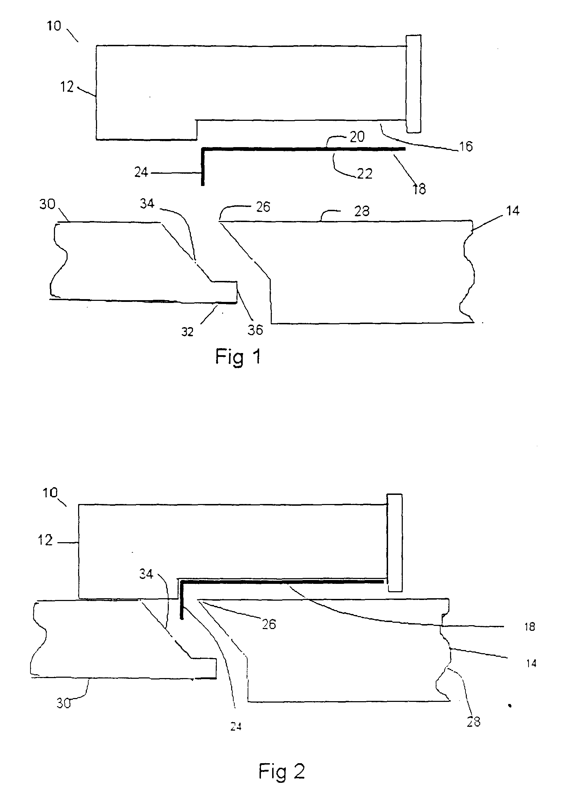

Illustrated in Figure 1 is a moveable mold press 10 having a cavity 12 and a moveable core 14. The cavity 12 has an interior surface 16 that imparts a shape on a molded article. The cavity 12 receives a pre-molded flexible thermoformed film 18. The film 18 may be either a thin film such as Avloy™ manufactured by Avery Dennison or ISF™ manufactured by 3M/Rexam. Alternatively, the film may be a thick film such as polyvinyl chloride or thermoplastic urethane as are normally used in automotive interior trim applications. Other types of films are also useful in the present invention. The film 18 has a painted surface 20 and a backing sheet 22. The film 18 is placed within the cavity 12 using an automated film loader (not shown). An example of a suitable automated film loader is illustrated and described in commonly assigned US patent application No. 08/903523. The painted surface 20 is juxtaposed to the cavity surface 16.

The film 18 includes an in-turned film flange portion 24. The film flange portion 24 is formed on the film 18 during the thermoforming operation (not shown). The film flange portion 24 is formed in roughly a 90° angle. To form the flange portion in an acute angle would cause interference between the film flange portion 24 and a corner 26 of the core 14. The film flange portion 24 covers a flange on the finished molded article.

The core 14 includes the molding surface 28 that imparts a shape to the molded article and a moveable slide 30. The slide 30 includes an end 32. The end 32 has an angled surface 34 and a shut-off surface 36. The angled surface 34 contacts the film flange portion 24 as will be shown in greater detail.

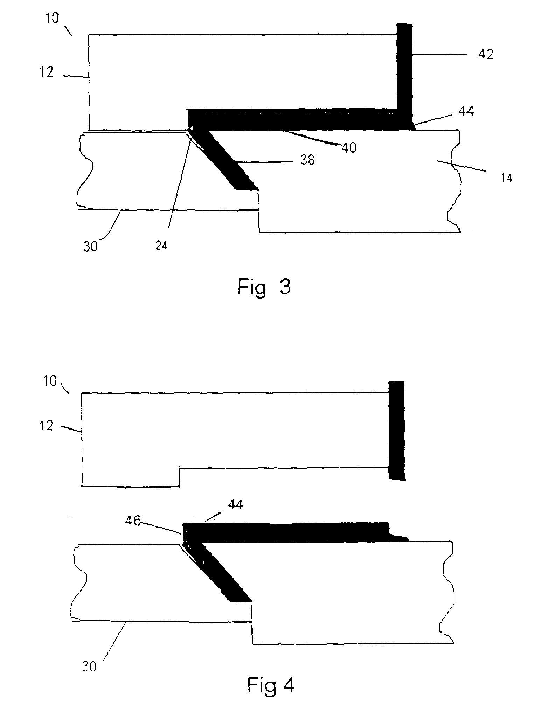

The press 10 is placed in the open position. The press 10 general has a stationary cavity and a movable core 14. The film 18 is placed within the core 14. The film flange portion 24 extends a distance beyond the cavity surface 16. The press 10 is closed and the core 14 is moved towards the cavity 12 as shown in figure 2. The slide 30 is positioned between the cavity 12 and the core 14. The slide 30 may be either attached to the cavity 12, the core 14 or made as a separate part. The slide 30 is in the retracted position when the press 10 is first closed. The film flange portion 24 passes between the corner 26 and the slide 30. After or while the 10 closes, the slide 30 is moved from the retracted position to the extended position as shown in figure 3.

Extending the slide 30 causes the angled surface 34 to contact the film flange portion 24 and to fold the film inwardly towards the core 14. The shut-off surface 36 contacts the core 14. A recessed portion 38 on the main body core 14 forms a space 40 between the slide 30, the core 14 and the cavity 12. The space 40 is opposite the film flange portion 24 and forms an acute angle around the corner 26. The space 40 is filled with plastic material as will be described below.

A resin inlet 42 injects molten plastic material into the space 40. The plastic material heats and softens the backing sheet 22 and adheres thereto. The plastic material forms an article 44 having a covered flange 46.

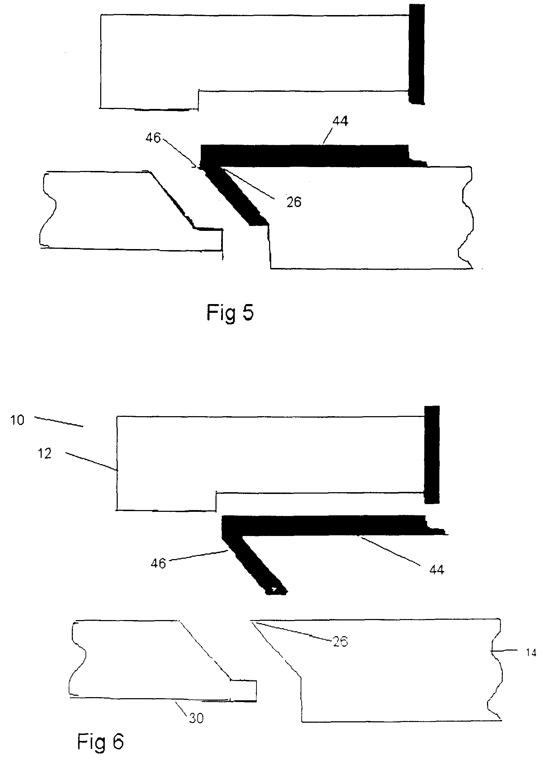

After the article 44 cools, the press 10 is opened as illustrated in Figures 4 through 6. The article 44 remains on the core 14 because the flange 46 is warped around the corner 26. It is desirable that the article 44 remains on the core 14 because it enables removing the article 44 using existing automated unloading equipment. After the press 10 is moved to the open position, the slide 30 is moved to the retracted position as illustrated in Figure 5.

The article 44 is in a die-lock condition and must be removed from the core 14. The covered flange 46 is flexible and is flexed over the corner 26. The article 46 is released from the core 14 and removed from the press 10 as shown in figure 6.

## Claims

1. A method of manufacturing an acute angle film-covered flange comprising the steps of:
providing a moveable press (10) having a cavity (12), a core (14), a slide (30) movable between retracted and extended positions between said core (14) and cavity (12), and a recessed portion (38);
placing a thermoformed film (18) within said press, said film having a flange portion (24);
closing said press (10) and moving said core (14) within said mould;
moving said slide (30) from said retracted position to said extended position and contacting said flange portion (24) and folding said flange portion (24) into an acute angle;
positioning said recessed portion (38) opposite said flange portion (24) to create a space (40) there between; and
injecting a molten plastic material into said space (40), said plastic material adhering to said flange portion (24) and forming an article having a covered flange.

2. A method as claimed in claim 1, further comprising opening said mold, said article being retained on said core.

3. A method as claimed in claim 2, further comprising moving said slide from said extended position to said retracted position and removing said article from said core.

4. A method as claimed in claim 1, wherein said slide moves linearly.

5. A method as claimed in claim 4, further comprising:
retaining said covered flange portion on said slide;
opening said press;
moving said core out of said cavity; and
moving said slide from said extended position to said retracted position to remove said article from said core.

6. A method as claimed in claim 1, wherein said core includes said recessed portion.

7. An apparatus for forming an acute film-covered flange comprising:
a moveable press (10) having a cavity (12), a core (14), and a slide (30), said slide (30) being positioned between said core (14) and cavity (12) and movable between retracted and extended positions, said press (10) having a recessed portion (38), said cavity (12) receiving a thermoformed film (18) having a flange portion (24);
said recessed portion (38) being opposite said flange portion (24) when said mould press (10) is closed and when said slide (30) is moved to the extended position to create a space (40) between said flange portion (24) and said recess portion (38), said space (40) forming an acute angle adjacent said flange portion (24), said slide (30) having a tip contacting said flange portion (24) and sealing said space (40); and
a resin inlet (42) for injecting a molten plastic material into said space to form said film-covered flange.

8. An apparatus as claimed in claim 7, wherein said slide moves linearly.

9. An apparatus as claimed in claim 7, wherein said slide includes said recessed portion.

10. An apparatus as claimed in claim 7, wherein said core includes said recessed portion.
